Europäisches Patentamt

European Patent Office

Office européen des brevets

(19)

(11) Veröffentlichungsnummer: **0 213 683 B1**

(12) **EUROPÄISCHE PATENTSCHRIFT**

(45) Veröffentlichungstag der Patentschrift: **05.05.93**

(51) Int. Cl.⁵: **H04N 7/12**

(21) Anmeldenummer: **86201496.6**

(22) Anmeldetag: **01.09.86**

(54) **Verfahren und Anordnung zur Erzeugung von Zwischenbildsignalen aus Referenzbildsignalen mit verringerter Bildfrequenz.**

(30) Priorität: **05.09.85 DE 3531677**

(43) Veröffentlichungstag der Anmeldung:
**11.03.87 Patentblatt 87/11**

(45) Bekanntmachung des Hinweises auf die Patenterteilung:
**05.05.93 Patentblatt 93/18**

(84) Benannte Vertragsstaaten:
**DE FR GB**

(56) Entgegenhaltungen:
**GB-A- 2 110 046**
**US-A- 4 383 272**

**ICASSP'82 PROCEEDINGS, IEEE INTERNA-TIONAL CONFERENCE ON ACOUSTICS, SPEECH AND SIGNAL PROCESSING, Paris, 3.-5. Mai 1982, Band 2,3, IEEE, New York, US; R.Y. TSAI et al.: "Uniqueness and estimation of three-dimensional motion parameters of a rigid planar patch from three perspective views"**

(73) Patentinhaber: **DST Deutsche System-Technik GmbH**
**Hans-Bredow-Strasse 20**
**W-2800 Bremen 44(DE)**

(72) Erfinder: **Rosebrock, Jens**
**Billungstrasse 30A**
**W-2800 Bremen 70(DE)**

(74) Vertreter: **Eisenführ, Speiser & Partner**
**Martinistrasse 24**
**W-2800 Bremen 1 (DE)**

**Beschreibung**

Die Erfindung betrifft ein Verfahren zur Erzeugung von Zwischenbildsignalen für Zwischenbilder aus Referenzbildsignalen, die von einem gegenüber einer Objektebene relativ bewegten Sensor mit einer um den Faktor N verringerten Bildfrequenz der Zwischenbilder übertragen werden, durch abbildungsangepaßte Interpolation und/oder Extrapolation, indem das Signal jedes Bildpunktes eines Zwischenbildes aus den Signalen von Referenzbildpunkten ermittelt wird, deren Koordinaten in mindestens einem von einem zeitlich vorangehenden und einem zeitlich folgenden Referenzbild nach einem Zuordnungsverfahren aus den Koordinaten des betreffenden Bildpunktes im Zwischenbild bestimmt werden, sowie eine Anordnung zur Durchführung des Verfahrens.

Derartige Verfahren sind aus der GB 2110046 A sowie der DE-PS 30 18 329 bekannt. Bei diesen Verfahren werden die Koordinaten der Bildpunkte der Referenzbilder durch eine geradlinige geometrische Zuordnung ermittelt, d.h. es wird angenommen, daß sich jeder Bildpunkt von einem Referenzbild auf einem geraden Wege zum entsprechenden Bildpunkt des nächsten Referenzbildes bewegt, um die Zwischenbilder zu rekonstruieren. Daher liegen die entsprechenden Bildpunkte aller Zwischenbilder auf diesem Weg. Das Zuordnungsverfahren beruht auf der Bestimmung des Weges von zwei Referenz-Bildpunkten mit unterschiedlichen Koordinaten in beiden Referenzbildern, der durch Korrelation des Bildinhaltes der beiden Referenzbilder ermittelt werden kann, wie grundsätzlich bekannt ist. Der Sensor ist irgendeine geeignete Einrichtung wie eine zweidimensionale Halbleiter-Sensormatrix, die mit einem entsprechenden optischen System mit Linsen ergänzt ist, so daß der Sensor eine definierte optische Achse hat. Es sei darauf hingewiesen, daß die Erfindung sich nicht auf die Interpolation von Bildpunkten bezieht, die in beiden Referenzbildern die exakt gleichen Positionen haben.

Das bekannte Verfahren erreicht nur eine grobe Annäherung an die tatsächliche Bewegung der Bildpunkte. Dies gilt, wenn die optische Achse des Sensors nicht senkrecht zur Objektebene steht, jedoch erst recht in dem Fall, in dem zwischen aufeinanderfolgenden Referenzbildern der Sensor keine geradlinige Bahn, sondern eine Kurve ausgeführt hat. Im letzteren Falle ergeben sich bei dem bekannten Verfahren Zwischenbilder, die zu den tatsächlich aufgenommenen Zwischenbildern große Abweichungen aufweisen.

Aufgabe der Erfindung ist es, ein Verfahren anzugeben, mit dem die nicht übertragenen Zwischenbilder möglichst naturgetreu rekonstruiert werden können, insbesondere auch dann, wenn der Sensor sich auf einer Kurve bewegt hat.

Diese Aufgabe wird erfindungsgemäß dadurch gelöst, daß die Zuordnung von Bildpunkten im zeitlich vorangehenden Referenzbild zu den entsprechenden Bildpunkten im zeitlich folgenden Referenzbild durch eine Abbildung erfolgt, die sich aus N aufeinanderfolgenden Durchführungen von Teilabbildungen ergibt, und daß die Zuordnung von Bildpunkten im zeitlich folgenden Referenzbild zu den entsprechenden Bildpunkten im zeitlich vorangehenden Referenzbild durch die entsprechende inverse Abbildung bzw. die inversen Teilabbildungen erfolgt,
und daß die Signale der Bildpunkte des n-ten Zwischenbildes, gerechnet von jeweils einem Referenzbild, aus den Signalen der Referenzbildpunkte ermittelt werden, deren Koordinaten im jeweils anderen Referenzbild aus den Koordinaten des Zwischenbildpunktes durch N-n aufeinanderfolgende Durchführungen der entsprechenden Teilabbildungen oder inversen Teilabbildungen bestimmbar sind.

Die Erfindung sieht also vor, die Zuordnung zwischen den Bildpunkten zweier Referenzbilder derart aufzuteilen, daß sich eine Anzahl untereinander gleicher Zuordnungen ergeben, die hintereinander geschaltet die Zuordnung für die beiden Referenzbilder ergeben. Das durch diese Aufteilung entstehende Zuordnungsverfahren für die Zwischenbilder führt dann dazu, daß sich Zwischenbilder ergeben, die keine geometrischen Verzerrungen enthalten, d.h. realen Bildern der Objektebene gleichen. Zumindest bei einem beliebig translatorisch, möglicherweise auch ungleichförmig parallel zur Objektebene bewegten Sensor werden durch dieses Zuordnungsverfahren Zwischenbilder erzeugt, die ein gleichförmig bewegter Sensor aufgenommen hätte.

Auch bei einer Bewegung des Sensors auf einer Kurve parallel zur Objektebene und mit einer konstanten Orientierung relativ zur Kurventangente ergeben sich Zwischenbilder, die dieser Sensor bei gleichförmiger Bewegung tatsächlich aufnimmt bzw. bei ungleichförmiger Bewegung denen eines gleichförmig bewegten Sensors entsprechen. Dabei muß das Zuordnungsverfahren aus mehr Bildpunkten der Referenzbilder ermittelt werden. Eine Anzahl von drei ergibt eine genauere Lösung und definiert jeweils ein Koordinatensystem und einen Maßstabsfaktor in jeder der Koordinatenrichtungen in jedem der benachbarten Referenzbilder.

In vielen Fällen bewegt sich ein Element des Bildes auf einer Kurve. Der Sensor bewegt sich meistens in einer mehr oder weniger "Vorwärts"-Richtung bezüglich der Objektebene, d.h. Bildobjekte treten in das Bildfeld allgemein von oben ein und verlassen es unten. Es ist daher klar, daß bei Zwischenbildern, die die gleiche Größe haben bzw. einen gleich großen Bildausschnitt darstellen wie die Referenzbilder, der untere Randbereich nur aus dem zeitlich vorangehenden Referenzbild erzeugt werden können, d.h. nur mittels Extrapolation, da dieser Randbereich im zeitlich folgenden Referenzbild nicht mehr vorhanden ist. Entsprechend kann der obere Randbereich der Zwischenbilder nur aus dem folgenden Referenzbild erzeugt werden. Jedes Zwischenbild wird also aus einer Mischung von Interpolation und Extrapolation erzeugt, es sei denn, die Zwischenbilder sind kleiner als die Referenzbilder. Besonders in diesem Falle können, wenn die Zuordnungssignale bereits vorhanden sind, das zeitlich folgende Referenzbild aber noch nicht vollständig übertragen ist, die ersten Zwischenbilder auch nur durch Extrapolation aus dem zeitlich vorhergehenden Referenzbild erzeugt werden.

Im übrigen brauchen die beiden Referenzbilder nicht unmittelbar benachbart zu sein, z.B. wenn ein Referenzbild durch Störungen nicht bzw. nicht vollständig empfangen werden kann. Die Werte für N und n sind dann ggf. entsprechend anzupassen.

Die erfindungsgemäße Aufteilung der Zuordnung im konkreten Fall hängt ab von der Darstellung der Zuordnung für zwei aufeinanderfolgende Referenzbilder. Aus IEEE Trans. on Acoustics, Speech, and Signal Processing, Vol. ASSP$-$29, No. 6, Dec. 1981, Seiten 1147$-$1152 ist bekannt, daß bei einem Sensor, der zentralperspektivisch abbildet, als Zuordnung einander entsprechender Bildpunkte in zwei Referenzbildern die folgende gilt

$$\begin{pmatrix} X_{R2} \\ Y_{R2} \\ 1 \end{pmatrix} = \frac{1}{a_7 X_{R1} + a_8 Y_{R1} + 1} \begin{pmatrix} a_1 & a_2 & a_3 \\ a_4 & a_5 & a_6 \\ a_7 & a_8 & 1 \end{pmatrix} \begin{pmatrix} X_{R1} \\ Y_{R1} \\ 1 \end{pmatrix}$$

wobei $X_{R1}$, $Y_{R1}$ bzw. $X_{R2}$, $Y_{R2}$ die Koordinaten der Bildpunkte benachbarter Referenzbilder sind und die Werte $a_1$ bis $a_8$ der Matrix mindestens aus den beiden Referenzbildern ermittelt werden. Dies kann mit vier Bildpunkten in jedem Referenzbild erfolgen. In diesem Falle ist das Zuordnungsverfahren für die Zwischenbilder gebildet durch

$$\begin{pmatrix} X_{R2} \\ Y_{R2} \\ 1 \end{pmatrix} = \frac{1}{c_7 X_n + c_8 Y_n + c_9} \begin{pmatrix} c_1 & c_2 & c_3 \\ c_4 & c_5 & c_6 \\ c_7 & c_8 & c_9 \end{pmatrix} \begin{pmatrix} X_n \\ Y_n \\ 1 \end{pmatrix}$$

mit

$$\begin{pmatrix} c_1 & c_2 & c_3 \\ c_4 & c_5 & c_6 \\ c_7 & c_8 & c_9 \end{pmatrix} = \begin{pmatrix} b_1 & b_2 & b_3 \\ b_4 & b_5 & b_6 \\ b_7 & b_8 & b_9 \end{pmatrix}^{N-n}$$

wobei $X_n$, $Y_n$ die Koordinaten der Bildpunkte des jeweiligen Zwischenbildes sind und die Werte $b_1$ bis $b_9$ für das Zuordnungsverfahren gebildet werden durch

$$\begin{pmatrix} b_1 & b_2 & b_3 \\ b_4 & b_5 & b_6 \\ b_7 & b_8 & b_9 \end{pmatrix} = \begin{pmatrix} a_1 & a_2 & a_3 \\ a_4 & a_5 & a_6 \\ a_7 & a_8 & 1 \end{pmatrix}^{1/N}$$

Mit den dadurch gewonnenen Werten der Matrix der Werte $c_1$ bis $c_9$ können dann für jeden Bildpunkt eines bestimmten Zwischenbildes die Koordinaten des zugehörigen Bildpunktes der beiden Referenzbilder ermittelt werden, und aus den Bildsignalen dieser Bildpunkte wird das Signal des betreffenden Bildpunktes des Zwischenbildes ermittelt. Die Matrix der Werte $c_1$ bis $c_9$ kann durch die Bildung der entsprechenden Potenz der Matrix der Werte $b_1$ bis $b_9$, die die Zuordnung der Bildpunkte zweier aufeinanderfolgender Zwischenbilder angibt, oder direkt durch Bildung der gebrochenen Potenz der Matrix der Werte $a_1$ bis $a_8$ ermittelt werden. Insbesondere diese letztere Potenz kann auf einfache Weise dadurch mit ausreichender Genauigkeit angenähert werden, daß die Werte $c_1$ bis $c_9$ gebildet werden durch

$$\begin{pmatrix} c_1 & c_2 & c_3 \\ c_4 & c_5 & c_6 \\ c_7 & c_8 & c_9 \end{pmatrix} = \frac{N-n}{N} \begin{pmatrix} \dfrac{N}{N-n}+(a_1-1) & a_2 & a_3 \\ a_4 & \dfrac{N}{N-n}+(a_5-1) & a_6 \\ a_7 & a_8 & \dfrac{N}{N-n} \end{pmatrix}$$

Auf diese Weise werden Zwischenbilder erhalten, die den exakten Zwischenbildern weitestgehend gleichen.

Bei der Erzeugung von Zwischenbildern durch Interpolation zwischen jeweils entsprechenden Bildpunkten beider Referenzbilder sind für beide Referenzbilder unterschiedliche Zuordnungsverfahren erforderlich, die aus den beiden Referenzbildern ermittelt werden können, indem jeweils von einem Referenzbild ausgehend die Bildpunkte dem anderen Referenzbild zugeordnet werden, und aus diesen beiden Zuordnungen können die beiden Zuordnungsverfahren für die Bestimmung der Koordinaten der Bildpunkte beider Referenzbilder, ausgehend von einem bestimmten zu erzeugenden Bildpunkt des Zwischenbildes, gebildet werden. In manchen Fällen kann es jedoch einfacher sein, daß als Zuordnungsverfahren für die Bestimmung der Koordinaten des einen Referenzbildes das inverse Zuordnungsverfahren wie für die Bestimmung der Koordinaten des anderen Referenzbildes verwendet wird. Dies bedeutet bei der angegebenen bekannten Zuordnung zweier Bilder eine Matrixinversion, die mit geringerem Aufwand durchgeführt werden kann als die Bestimmung der Zuordnung von Bildpunkten zweier benachbarter Referenzbilder.

Die Zuordnung einander entsprechender Bildpunkte in zwei Referenzbildern kann am Empfangsort aus den übertragenen Referenzbildern ermittelt werden. Es ist jedoch auch möglich, daß die die Zuordnung einander entsprechender Bildpunkte in zwei Referenzbildern angebenden Signale auf der Sensorseite ermittelt und zusätzlich zu den Referenzbildsignalen übertragen werden. Dabei ist es besonders günstig, wenn die die Zuordnung angebenden Signale auf der Sensorseite aus den vom Sensor mit höhererBildfolgefrequenz erzeugten Bildern ermittelt werden. Auf diese Weise wird nicht nur vermieden, daß eine durch Übertragungsfehler im Referenzbild entstehende falsche Zuordnung für die Ermittlung des Zuordnungsverfahrens verwendet wird, sondern die Ermittlung der Zuordnung wird dadurch einfacher und zuverlässiger.

Bei manchen Aufnahmen können mehrere Objektebenen vorhanden sein, die sich möglicherweise verschieden relativ zum Sensor bewegen. In diesem Fall ist es zweckmäßig, daß für jede Objektebene ein gesondertes Zuordnungsverfahren aus der Zuordnung einander entsprechender Bildpunkte in einem diese Objektebene umfassenden Teilbildbereich gebildet wird. Hierbei werden die rekonstruierten Zwischenbilder also aus zwei oder gegebenenfalls mehreren Bildbereichen zusammengesetzt.

Eine Anordnung für eine einfache Durchführung des erfindungsgemäßen Verfahrens enthält vorteilhaft eine Rechenanordnung, die aus den die Zuordnung einander entsprechender Bildpunkte in zwei Referenzbildern angebenden Signalen die Signale für die resultierende Zuordnung der Bildpunkte des im zugehörigen Bildspeicher enthaltenen Referenzbildes zu jedem Bildpunkt des jeweiligen Zwischenbildes ermittelt, mindestens einen frei adressierbaren Bildspeicher, der die übertragenen Referenzbildsignale in einer vorgegebenen Adressenfolge aufnimmt,

4

eine Adreßrechenanordnung, die aus den für das Zuordnungsverfahren von der Rechenanordnung ermittelten Signalen und den Koordinaten der Bildpunkte des jeweils zu erzeugenden Zwischenbildes die Adressen der zugehörigen Referenzbildsignale im Bildspeicher erzeugt und diesem zuführt, und

eine Ausgangsanordnung, die aus den an diesen Adressen ausgelesenen Referenzbildsignalen die Zwischenbildsignale erzeugt. Dabei kann die Rechenanordnung speziell für die Ermittlung der Signale für das Zuordnungsverfahren ausgelegt sein, wobei die resultierende Zuordnung für jedes neue Zwischenbild durch die $(N-n)$-fache Anwendung des Zuordnungsverfahrens für aufeinanderfolgende Zwischenbilder oder durch direkte Bildung der Zuordnung, wie bereits anhand der bekannten Darstellung der Zuordnung von zwei Bildern erläutert, ermittelt wird. Der Bildspeicher enthält dabei die Bildsignale des vorangegangenen Referenzbildes, und die Adreßrechenanordnung liefert für jeden Bildpunkt des zu erzeugenden Zwischenbildes die Adresse von Bildpunkten im Bildspeicher, aus denen die entsprechenden Bildsignale ausgelesen werden. Die Ausgangsanordnung erzeugt in diesem Falle der Extrapolation die Zwischenbildsignale direkt aus den Referenzbildsignalen.

Für die Erzeugung von Zwischenbildsignalen durch Interpolation ist es zweckmäßig, daß zwei frei adressierbare Bildspeicher vorgesehen sind, die abwechselnd die Referenzbildsignale je eines Referenzbildes aufnehmen, daß jedem Bildspeicher eine Adreßrechenanordnung zugeordnet ist, daß die Rechenanordnung für jede Adreßrechenanordnung die Signale für die resultierende Zuordnung der Bildpunkte des im zugehörigen Bildspeicher enthaltenen Referenzbildes zu jedem Bildpunkt des jeweiligen Zwischenbildes ermittelt und daß in der Ausgangsanordnung für jeden Bildspeicher ein Multiplizierer, der die aus dem zugehörigen Bildspeicher ausgelesenen Referenzbildsignale mit einem von der Rechenanordnung entsprechend der Ordnungsnummer n des Zwischenbildes erzeugten Gewichtsfaktor multipliziert, und ein Addierer zum Addieren der multiplizierten Referenzbildsignale und zum Erzeugen der Zwischenbildsignale vorgesehen ist. Durch das abwechselnde Aufnehmen aufeinanderfolgender Referenzbilder durch die beiden Bildspeicher sind beide Referenzbilder für die Erzeugung der Zwischenbilder parallel verfügbar. Da die Übertragung der Referenzbildsignale jedoch allgemein so langsam erfolgt, daß die Übertragungszeit für ein Referenzbild größer ist als die Zeit für die Darstellung eines Bildes, ist es allerdings erforderlich, daß noch ein Pufferspeicher für die Signale des gerade übertragenen Referenzbildes vorhanden ist, da der Inhalt der beiden frei adressierbaren Bildspeicher während der gesamten Zeit der Erzeugung aller Zwischenbilder zwischen zwei aufeinanderfolgenden Referenzbildern unverändert bleiben muß. Die Erzeugung der Zwischenbildsignale erfolgt durch eine Kombination der Bildsignale der Referenzbilder, die von der zeitlichen Entfernung des betreffenden Zwischenbildes von dem zugehörigen Referenzbild abhängt.

Wenn für einen bestimmten Bildpunkt eines Zwischenbildes die Koordinaten des zugehörigen Bildpunktes in einem Referenzbild bestimmt werden, ergeben sich aufgrund der Berechnung selten ganzzahlige Koordinaten, sondern es werden auch Bruchteile von Koordinaten bestimmt, d.h. der Bildpunkt im Referenzbild, der zu einem bestimmten Bildpunkt des Zwischenbildes gehört, liegt zwischen tatsächlich vorhandenen Bildpunkten im Referenzbild. Im einfachsten Fall kann der Koordinatenwert gerundet werden, d.h. es wird der dem exakten Bildpunkt am nächsten liegende tatsächliche Bildpunkt des Referenzbildes verwendet. Für eine genauere Bestimmung der Bildpunkte eines Zwischenbildes kann das Bildsignal des rechnerischen Bildpunktes auch aus den Signalen der umliegenden vier Bildpunkte ermittelt werden. Dafür ist es zweckmäßig, daß jeder Bildspeicher aus vier Teilspeichern besteht, von denen jeder die Referenzbildsignale eines anderen von jeweils vier in einem Quadrat benachbarten Referenzbildpunkten aufnimmt, daß jede Adreßrechenanordnung die Adressen auf Bruchteile von ganzen Einheiten genau bestimmt und in jedem Teilspeicher den Referenzbildpunkt adressiert, der der genauen Adresse am nächsten benachbart ist, und

daß den Bildsignalausgängen der Teilspeicher eine Multiplizieranordnung, die das Bildsignal jedes Teilspeichers mit einem von der letzten Stelle und den Nachkommastellen der genauen Adresse abgeleiteten Gewichtsfaktor multipliziert, und eine Addiervorrichtung zum Addieren der multiplizierten Bildsignale und zum Erzeugen des resultierenden Referenzbildsignales für die Ausgangsanordnung nachgeschaltet ist. Jedes Bildsignal des Referenzbildes wird dabei also aus den Bildsignalen von vier im Quadrat benachbarten Referenzbildpunkten ermittelt, die je für sich abhängig von dem Abstand zum rechnerischen Bildpunkt gewichtet werden. Durch die Verwendung von vier Teilspeichern je Bildspeicher ist dann eine sehr schnelle Verarbeitung möglich.

Eine besonders schnelle Bestimmung der Koordinaten der Referenzbildpunkte bei Verwendung von Zuordnungsverfahren, die aus dem eingangs genannten bekannten Verfahren der Zuordnung von Referenzbildern ermittelt sind, ist nach einer weiteren Ausgestaltung der Erfindung dadurch gekennzeichnet, daß jede Adreßrechenanordnung drei Teilrechenanordnungen, die die beiden Zählerwerte für die Adressen der beiden Koordinatenrichtungen und den Nennerwert getrennt aus den jeweils von der Rechenanordnung zugeführten Werten $c_1$ bis $c_9$ und aus den Koordinaten des momentanen Bildpunktes des Zwischenspeichers ermitteln, eine Kehrwertanordnung, die der Teilrechenanordnung für den Nennerwert nachgeschaltet ist und den Kehrwert des Nennerwertes bildet, und zwei Multiplizierer enthält, die die beiden Zählerwerte mit dem Kehrwert multiplizieren, wobei die Ausgangssignale beider Multiplizierer zusammen die Adresse des Referenzbildpunktes im zugehörigen Referenzbildspeicher darstellen. Da bei der Bestimmung beider Koordinaten eines Referenzbildpunktes je eine Division auszuführen ist, die in beiden Fällen den gleichen Nenner hat, braucht dieser nur einmal ermittelt und in den Kehrwert umgewandelt zu werden, was mit einer Kehrwertanordnung, die zweckmäßig als Festwertspeicher ausgeführt ist, leicht und schnell möglich ist, so daß dann Multiplizierer verwendbar sind, die schneller arbeiten als Anordnungen zur Division.

Eine besonders günstige Ausgestaltung der erfindungsgemäßen Anordnung für den Fall, daß von dem eingangs genannten bekannten Verfahren der Zuordnung zweier Referenzbilder ausgegangen wird, ist dadurch gekennzeichnet, daß jede Teilrechenanordnung einen Akkumulator aus einem Addierer und einem nachgeschalteten Register, dessen Ausgang mit dem einen Eingang des Addierers verbunden ist, enthält, wobei dem anderen Eingang des Addierers ein Umschalter vorgeschaltet ist, der von einem Bildwechselsignal gesteuert zu Beginn jedes neuen Zwischenbildes den absoluten Koeffizienten $c_3$ bzw. $c_6$ bzw. $c_9$ bzw. einen davon abgeleiteten Wert und außerdem von einem Zeilenwechselsignal gesteuert zu Beginn jeder neuen Zeile den zur Zeilenkoordinate $Y_n$ gehörigen Koeffizienten $c_2$ bzw. $c_5$ bzw. $c_8$, vermindert um das $k-$fache des zur Spaltenkoordinate $X_n$ (Bildpunkte) gehörigen Koeffizienten $c_1$ bzw. $c_4$ bzw. $c_7$, wobei $k$ die Anzahl Bildpunkte pro Zeile ist, und im übrigen diesen letzteren Koeffizienten dem anderen Eingang des Addierers zuführt, wobei das Register mit jedem Bildpunkttakt das Ausgangssignal des Addierers übernimmt und der Ausgang des Registers der jeweiligen Teilrechenanordnung den Zählerwert bzw. den Nennerwert liefert. Die Koeffizienten $b_1$ bis $b_9$ sind dabei so gewählt bzw. derartig normiert, daß die Zeilenkoordinate und die Spaltenkoordinate durch die entsprechende Ordnungsnummer dargestellt werden kann, wodurch die Multiplikation eines Koordinatenwertes mit einem Koeffizienten durch die Akkumulation dieses Koeffizienten ersetzt werden kann, so daß sich eine besonders einfache Anordnung ergibt.

Ausführungsbeispiele der Erfindung werden nachstehend anhand der Zeichnung näher erläutert. Es zeigen:

Fig. 1 die Lage von festen Objektpunkten in aufeinanderfolgenden Referenzbildern,

Fig. 2 ein Blockschaltbild einer Anordnung zur Durchführung des erfindungsgemäßen Verfahrens,

Fig. 3 ein Blockschaltbild eines Adreßrechners in der Anordnung nach Fig. 2,

Fig. 4 die Aufteilung der Bildpunkte eines Referenzbildes auf vier Teilspeicher,

Fig. 5 eine Anordnung zur Erzeugung des Bildsignals eines Bildpunktes, dessen rechnerische Koordinaten zwischen denen der tatsächlichen Bildpunkte liegen.

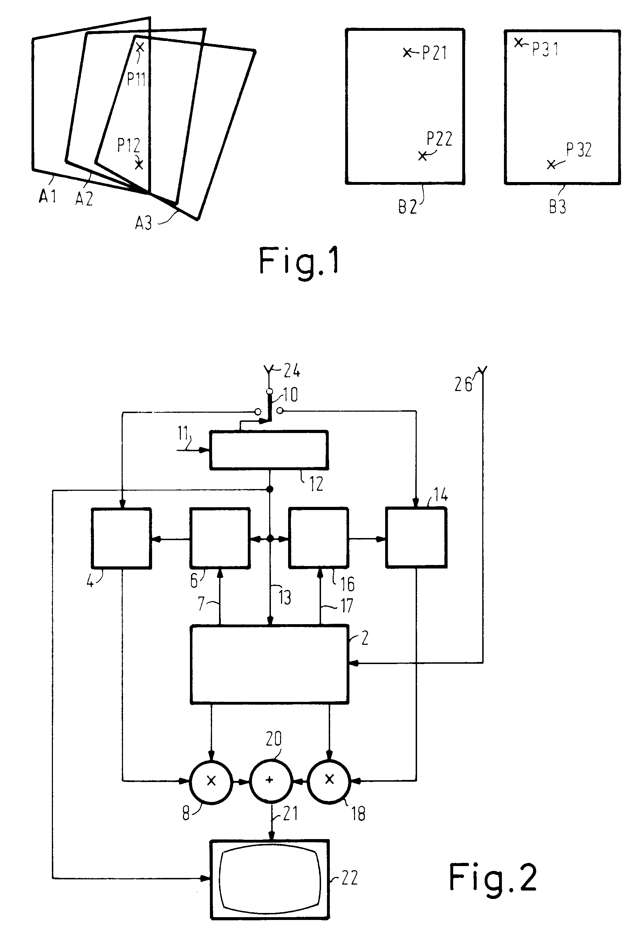

In Fig. 1 sind mit A1, A2 und A3 drei Ausschnitte einer Objektebene bezeichnet, die von einem nicht dargestellten bewegten Sensor nacheinander abgetastet und in elektrische Signale umgesetzt werden. Die Ausschnitte A1 bis A3 sind durch den schräg nach vorn gerichtet angenommenen Sensor trapezförmig verzerrt. Dabei werde angenommen, daß die Bewegungsbahn des Sensors eine Kurve ist. Dadurch wandert relativ zu den Ausschnitten der Punkt P11 rechts oben im Ausschnitt A1 nach links oben im Ausschnitt A3 während der Punkt P12 rechts unten im Ausschnitt A1 etwa in die untere Mitte des Ausschnittes A3 wandert.

Die zu den Ausschnitten A2 und A3 gehörenden rechteckigen Referenzbilder B2 und B3 sind daneben getrennt gezeichnet, und darin liegt der Objektpunkt P11 an den Stellen P21 bzw. P31 und der Objektpunkt P12 an den Stellen P22 bzw. P32. Es sollen nun Zwischenbilder erzeugt werden, die Ausschnitte der Objektebene darstellen, die zwischen den Ausschnitten A2 und A3 liegen, wobei die Bildsignale der Zwischenbilder aus den Bildsignalen der Referenzbilder B2 und B3 abgeleitet werden, und zwar unter Ausnutzung der Zuordnung beispielsweise der Punkte P21 und P22 und weiterer Punkte zu den Punkten P31 und P32 und entsprechender weiterer Bildpunkte.

Gemäß der eingangs genannten Literaturstelle aus IEEE Trans. on Acoustics, Speech, and Signal Processing, Vol. ASSP$-$29, No. 6, Dec. 1981, Seiten 1147$-$1152 kann die Zuordnung aller einander entsprechender Bildpunkte in zwei aufeinanderfolgenden Bildern durch einen Satz von acht Parametern in folgender Form dargestellt werden

$$\begin{pmatrix} X_{R2} \\ Y_{R2} \\ 1 \end{pmatrix} = \frac{1}{a_7 X_{R1} + a_8 Y_{R1} + 1} \begin{pmatrix} a_1 & a_2 & a_3 \\ a_4 & a_5 & a_6 \\ a_7 & a_8 & 1 \end{pmatrix} \begin{pmatrix} X_{R1} \\ Y_{R1} \\ 1 \end{pmatrix}$$

Dies bedeutet, daß zu jeder Koordinate $X_{R1}$, $Y_{R1}$ des Referenzbildes R1 mit Hilfe der Zuordnungsparameter $a_1$ bis $a_8$ die Koordinate $X_{R2}$, $Y_{R2}$ desjenigen Bildpunktes des Referenzbildes R2 gefunden werden kann, der den selben Bildpunkt in der Objektebene darstellt.

Ein Zuordnungsverfahren für Zwischenbilder, die zwischen den beiden Referenzbildern $R_1$ und $R_2$ liegen, d.h. gemäß Fig. 1 beispielsweise zwischen den beiden Referenzbildern B2 und B3, soll nun derart sein, daß beim Verwenden der Koordinaten eines Zwischenbildes sich die Koordinaten der einander entsprechenden Bildpunkte des folgenden Zwischenbildes ergeben. Bei der genannten bekannten Zuordnung ist also ein Satz von Zuordnungsparametern $b_1$ bis $b_9$ zu finden, die diesen Bedingungen genügen. Aufgrund der Tatsache, daß die Zuordnung zweier beliebiger benachbarter Zwischenbilder immer gleich sein soll, läßt sich nachweisen, daß sich die Parameter für das zugehörige Zuordnungsverfahren auf folgende Weise aus der Zuordnung der beiden Referenzbilder R1 und R2 ergeben:

$$\begin{pmatrix} b_1 & b_2 & b_3 \\ b_4 & b_5 & b_6 \\ b_7 & b_8 & b_9 \end{pmatrix} = \begin{pmatrix} a_1 & a_2 & a_3 \\ a_4 & a_5 & a_6 \\ a_7 & a_8 & 1 \end{pmatrix}^{1/N}$$

Da das Ableiten jedes Zwischenbildes aus dem jeweils vorhergehenden Zwischenbild Ungenauigkeiten akkumulieren würde und eine Interpolation zwischen zwei Referenzbildern nicht ohne weiteres zulassen würde, ist es günstiger, jedes Zwischenbild direkt auf das vorhergehende und bei Interpolation auch auf das nachfolgende Referenzbild in folgender Weise zu beziehen.

$$\begin{pmatrix} X_{R2} \\ Y_{R2} \\ 1 \end{pmatrix} = \frac{1}{c_7 X_n + c_8 Y_n + c_9} \begin{pmatrix} c_1 & c_2 & c_3 \\ c_4 & c_5 & c_6 \\ c_7 & c_8 & c_9 \end{pmatrix} \begin{pmatrix} X_n \\ Y_n \\ 1 \end{pmatrix}$$

wobei

$$\begin{pmatrix} c_1 & c_2 & c_3 \\ c_4 & c_5 & c_6 \\ c_7 & c_8 & c_9 \end{pmatrix} = \begin{pmatrix} b_1 & b_2 & b_3 \\ b_4 & b_5 & b_6 \\ b_7 & b_8 & b_9 \end{pmatrix}^{N-n} \quad \text{ist.}$$

Darin bedeuten $X_n$ und $Y_n$ die Koordinaten eines Bildpunktes des $n-$ten Zwischenbildes, gerechnet vom Referenzbild $R_1$ aus. Dieses Zwischenbild wird also direkt auf ein Referenzbild, im vorliegenden Fall $R_2$, durch eine Zuordnung mit einem Parametersatz bezogen, der sich durch die $N-n-$fache Anwendung des ermittelten Zuordnungsverfahrens mit den Parametern $b_1$ bis $b_9$ ergibt.

Die Koordinaten im Referenzbild $R_1$ ergeben sich aus der Koordinate des Zwischenbildes durch die $n-$fache Anwendung des inversen Zuordnungsverfahrens auf folgende Weise

$$\begin{pmatrix} X_{R1} \\ Y_{R1} \\ 1 \end{pmatrix} = \cfrac{1}{d_7 X_n + d_8 Y_n + d_9} \begin{pmatrix} d_1 & d_2 & d_3 \\ d_4 & d_5 & d_6 \\ d_7 & d_8 & d_9 \end{pmatrix} \begin{pmatrix} X_n \\ Y_n \\ 1 \end{pmatrix}$$

wobei

$$\begin{pmatrix} d_1 & d_2 & d_3 \\ d_4 & d_5 & d_6 \\ d_7 & d_8 & d_9 \end{pmatrix} = \begin{pmatrix} b_1 & b_2 & b_3 \\ b_4 & b_5 & b_6 \\ b_7 & b_8 & b_9 \end{pmatrix}^{-n} \quad \text{ist.}$$

Eine Anordnung zur Ermittlung und Durchführung eines derartigen Zuordnungsverfahrens ist in Fig. 2 dargestellt. Die Zuordnungssignale entsprechend den Parametern $a_1$ bis $a_8$, die beispielsweise auf der Sensorseite erzeugt und übertragen worden sind, werden einem Rechner 2 zugeführt, der daraus die Werte der Parameter $b_1$ bis $b_9$ des Zuordnungsverfahrens für zwei aufeinanderfolgende Zwischenbilder bzw. die Werte der Parameter $c_1$ bis $c_9$ und/oder $d_1$ bis $d_9$ der resultierenden Zuordnung berechnet. Die Bildung der Potenzen der Wurzel aus der Matrix der zugeführten Parameter der Zuordnung zweier aufeinanderfolgender Referenzbilder kann exakt bestimmt werden, jedoch kann diese Wurzel auch mit ausreichender Genauigkeit durch folgenden Zusammenhang angenähert werden

$$\begin{pmatrix} c_1 & c_2 & c_3 \\ c_4 & c_5 & c_6 \\ c_7 & c_8 & c_9 \end{pmatrix} = \frac{N-n}{N} \begin{pmatrix} \frac{N}{N-n}+(a_1-1) & a_2 & a_3 \\ a_4 & \frac{N}{N-n}+(a_5-1) & a_6 \\ a_7 & a_8 & \frac{N}{N-n} \end{pmatrix}$$

Dies ergibt sich, wenn die Potenz der Wurzel in eine Taylor−Reihe geschrieben und diese Reihe nach dem ersten Glied abgebrochen wird.

Der Rechner 2 liefert also über die Leitungen 7 und 17 zwei Adreßrechnern 6 und 16 Signale, die die aus der Potenzierung der Grund−Zuordnungsmatrix bzw. deren Inversen davon entsprechend dem Abstand des jeweiligen Zwischenbildes zum entsprechenden Referenzbild entstehenden Matrizen angeben. Ferner erhalten die Adreßrechner 6 und 16 die Koordinatenwerte $X_n$, $Y_n$ des jeweiligen Bildpunktes des zu erzeugenden Zwischenbildes sowie dessen Ordnungsnummer n von einem Zähler 12 über die Verbindung 13, die auch mit dem Rechner 2 verbunden ist. Der Zähler 12 erhält über die Leitung 11 von einem nicht dargestellten Taktgenerator ein Zähltaktsignal entsprechend der Bildpunktfolgefrequenz und steuert bzw. synchronisiert daher auch die Darstellungsanordnung 22. Die Adreßrechner 6 und 16 berechnen für jede Koordinate $X_n$, $Y_n$ und die Ordnungsnummer n die Koordinaten $X_{R2}$, $Y_{R2}$ bzw. $X_{R1}$, $Y_{R1}$ der zugehörigen Bildpunkte des entsprechenden Referenzbildes R2 bzw. R1 auf folgende Weise

8

$$X_{R2} = \frac{c_1 X_n + c_2 Y_n + c_3}{c_7 X_n + c_8 Y_n + c_9} = \frac{Z_X}{N} \qquad X_{R1} = \frac{d_1 X_n + d_2 Y_n + d_3}{d_7 X_n + d_8 Y_n + d_9}$$

$$Y_{R2} = \frac{c_4 X_n + c_5 Y_n + c_6}{c_7 X_n + c_8 Y_n + c_9} = \frac{Z_Y}{N} \qquad Y_{R1} = \frac{d_4 X_n + d_5 Y_n + d_6}{d_7 X_n + d_8 Y_n + d_9}$$

Darin sind die Parameter $c_1$ bis $c_9$ bzw. $d_1$ bis $d_9$ durch die angegebene Potenzierung der Matrix des Grund-Zuordnungsverfahrens für zwei aufeinanderfolgende Zwischenbilder erzeugt. Die abgekürzten Bezeichnungen $Z_X$, $Z_Y$ bzw. N werden später verwendet.

Diese Koordinatenwerte werden nun als Adressen Bildspeichern 4 und 14 zugeführt, die die Bildsignale zweier aufeinanderfolgender Referenzbilder enthalten. Dafür werden die Bildspeicher 4 und 14 über den Eingang 24 für die Bildsignale durch den vom Zähler 12 gesteuerten Umschalter 10 abwechselnd mit den Bildsignalen jeweils eines Referenzbildes gefüllt. Diese dem Eingang 24 zugeführten Bildsignale können entweder direkt die übertragenen Bildsignale sein oder, da die Übertragung der Referenzbildsignale allgemein so langsam erfolgt, daß die Übertragungszeit für ein Referenzbild größer ist als die Zeit für die Darstellung eines Bildes, von einem nicht dargestellten Bildpufferspeicher geliefert sein, der die übertragenen Bildsignale langsam aufnimmt und nach Erzeugung des letzten Zwischenbildes schnell an den jeweiligen Bildspeicher abgibt.

Die aus den Bildspeichern 4 und 14 an den adressierten Stellen ausgelesenen Bildsignale, die den Helligkeitswert gleicher Objektpunkte in beiden Referenzbildern darstellen, werden vorzugsweise so gewichtet zusammengefügt, daß das resultierende Bildsignal einen Helligkeitswert darstellt, der zwischen der Helligkeit der beiden zugehörigen Bildpunkte in den beiden Bildspeichern liegt, und zwar entsprechend dem zeitlichen Abstand des jeweiligen Zwischenbildes von dem Referenzbild im Bildspeicher 4 bzw. 14, d.h. entsprechend seiner Ordnungsnummer n. Dafür werden die Bildsignale aus den Bildspeichern 4 bzw. 14 einem Multiplizierer 8 bzw. 18 zugeführt, wo sie mit Gewichtssignalen multipliziert werden, die der Rechner 2 von der Ordnungsnummer n des Zwischenbildes ableitet. Die multiplizierten Werte werden im Addierer 20 addiert und gegebenenfalls skaliert, sofern dies nicht durch die vom Rechner gelieferten Gewichtssignale berücksichtigt ist. Der Addierer 20 liefert am Ausgang 21 dann die Bildsignale des Zwischenbildes, die der Wiedergabeanordnung 22 zugeführt werden.

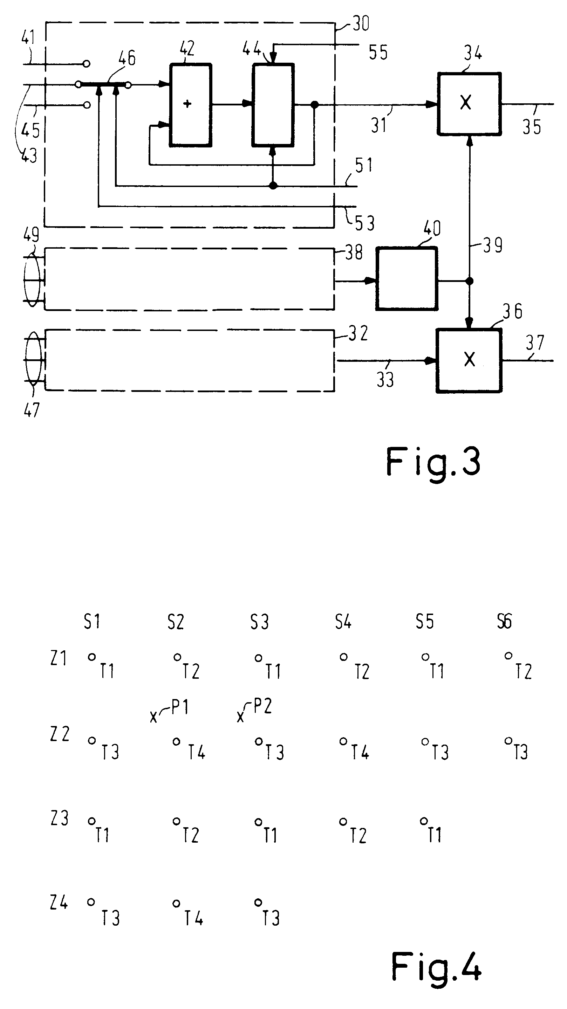

Die Bestimmung der Adressen für die Bildspeicher 4 bzw. 14 in den Adreßrechnern 6 bzw. 16 kann mittels einer in Fig. 3 dargestellten Schaltungsanordnung erfolgen. Diese enthält drei gleiche Blöcke 30, 32 und 38, die untereinander gleich aufgebaut sind, so daß dieser Aufbau nur bei dem Block 30 ausführlich dargestellt ist. Dieser Block führt die Bestimmung des Zählerwertes $Z_X$ für die X-Koordinate nach folgender Gleichung durch

$$Z_X = c_1 X_n + c_2 Y_n + c_3$$

Dazu werden von den Parametern $c_1$ bis $c_3$ abgeleitete Signale über die Leitungen 41, 43 und 45 von der Rechenanordnung 2 in Fig. 2 und über die Eingänge 51, 53 und 55 Steuertaktsignale vom Zähler 12 zugeführt.

Zu Beginn eines jeden neuen Zwischenbildes wird über die Leitung 51 ein Bildwechselsignal zugeführt, das den Umschalter 46 in die obere Lage schaltet, so daß der am Eingang 41 zugeführte Wert dem oberen Eingang des Addierers 42 zugeführt wird, dessen unterer Eingang vom Ausgang des Registers 44 den Wert Null erhält, da dieses Register durch das Bildtaktsignal auf der Leitung 51 gelöscht wurde. Der am Eingang 41 zugeführte Wert entspricht dem absoluten Koeffizieten $c_3$ mit einer möglichen Einschränkung, die nachfolgend erläutert wird. Dieser Wert steht somit auch am Ausgang des Addierers 42 und damit am Eingang des Registers 44 an und wird mit dem nächsten Bildpunkttaktsignal auf der Leitung 55 in das Register 44 übernommen.

Danach verschwindet das Bildwechselsignal auf der Leitung 51, und der Umschalter 46 wird nun bis zum nächsten Bildwechselsignal nur von dem Zeilentaktsignal auf der Leitung 53 zwischen den beiden unteren Stellungen gesteuert.

Mit dem ersten Zeilentaktsignal unmittelbar nach dem Bildwechselsignal wird der Umschalter 46 in der mittleren Stellung gehalten, wodurch dem oberen Eingang des Addierers 42 der am Eingang 43 anliegende Wert für den zur Zeilenkoordinate $Y_n$ gehörende Koeffizient $c_2$, ebenfalls mit einer nachfolgend zu erläuternden möglichen Einschränkung, zugeführt wird. Dieser Wert wird zu dem bereits im Register 44 befindlichen, am unteren Eingang des Addierers 42 anliegenden Wert des absoluten Koeffizienten $c_3$ addiert und die Summe dem Register 44 zugeführt und darin mit dem nächsten Bildpunkttaktsignal auf der Leitung 55 eingeschrieben.

Anschließend verschwindet das Zeilentaktsignal auf der Leitung 53, und der Umschalter 46 schaltet in die untere Lage, so daß der auf der Leitung 45 vorhandene, zur Spaltenkoordinate $X_n$, die den Bildpunkten auf der Zeile entspricht, gehörige Koeffizient $c_1$ dem oberen Eingang des Addierers 42 zugeführt wird. Die Anordnung aus dem Addierer 42 und dem Register 44 stellt nun einen Akkumulator dar, der mit jedem Bildpunkttaktsignal auf der Leitung 55 den Wert des Koeffizienten $c_1$ zur vorher ermittelten Summe aufakkumuliert.

Mit dem nächsten Zeilentaktsignal auf der Leitung 53 wird der Umschalter 46 wieder in die mittlere Stellung geschaltet, und von nun an muß über den Eingang 43 nicht nur der zur Zeilenkoordinate $Y_n$ gehörige Koeffizient $c_2$ addiert werden, sondern außerdem muß die Akkumulation des zur Spaltenkoordinate $X_n$ gehörigen Koeffizienten $c_1$ wieder erneut beginnen. Deshalb wird nun über den Eingang 43 der Wert $(c_2 - kc_1)$ zugeführt, wobei k die Anzahl der Bildpunkte einer Zeile, d.h. die Anzahl Male, die der Koeffizient $c_1$ zwischen zwei Zeilentaktsignalen aufakkumuliert wurde, ist. Um zu vermeiden, daß bei dem ersten Zeilentaktsignal nach einem Bildwechselsignal ein anderer Wert am Eingang 43 zugeführt werden muß, nämlich der Koeffizient $c_2$ allein, kann dem Eingang 41 die Summe $(c_3 + kc_1)$ und dem Eingang 43 ständig die genannte Differenz $(c_2 - kc_1)$ zugeführt werden.

Am Ausgang 31 des Blockes 30 erscheinen somit aufeinanderfolgend Zählerwerte $Z_X$ für aufeinanderfolgende Bildpunkte jeweils einer Zeile eines Zwischenbildes. Dabei ist vorausgesetzt, daß die über die Eingänge 41, 43 und 45 zugeführten Werte der Parameter $c_1$ bis $c_3$ so gewählt sind, daß der Wertebereich des Zählers $Z_X$ dem gewünschten Wertebereich entspricht, was durch entsprechende Normierung der Parameterwerte und/oder der von der Anordnung 40 erzeugten Kehrwerte, wie später erläutert wird, erreicht werden kann.

In entsprechender Weise wird im Block 32 aus den über die Eingänge 47 zugeführten Signale, die aus den Parametern $c_4$ bis $c_6$ abgeleitet sind, der Zählerwert $Z_Y$ für die Y-Koordinate und im Block 38 aus den über die Eingänge 49 zugeführten Signale, die aus den Parametern $c_7$ bis $c_9$ abgeleitet sind, der gemeinsame Nennerwert N ermittelt. Um die technische Ausführung einer Division zu vermeiden, wird der im Block 38 erzeugte Nennerwert einem Kehrwertbildner 40 zugeführt, der im einfachsten Falle aus einem Festwertspeicher bestehen kann. Der auf der Leitung 39 abgegebene Kehrwert wird dem einen Eingang von zwei Multiplizierern 34 und 36 zugeführt, von denen der eine Multiplizierer 34 über die Leitung 31 den Zählerwert $Z_X$ und der andere Multiplizierer 36 über die Leitung 33 den Zählerwert $Z_Y$ erhält. Die Multiplizierer 34 und 36 geben auf den Leitungen 35 und 37 aufeinanderfolgend die Werte der Koordinaten von Bildpunkten des zugehörigen Referenzbildes an, aus denen die zeilenweise aufeinanderfolgenden Bildpunkte des Zwischenbildes gewonnen werden. Diese Koordinatenwerte können in Adressen für den zugehörigen Bildspeicher umgesetzt werden, jedoch ist es zweckmäßig und auch üblich, die Bildpunkte im Bildspeicher an solchen Adressen anzuordnen, daß jede Adresse in zwei Adressenteile unterteilt werden kann, von denen der eine Adressenteil die eine Koordinate und der andere Adressenteil die andere Koordinate angibt. In einem solchen Fall führen die Leitungen 35 und 37 zusammen dann unmittelbar die Adresse des zugehörigen Bildspeichers. Dabei sind entsprechende Wertebereiche der von den Blöcken 30, 32 und 38 erzeugten Werte vorausgesetzt. Anderenfalls kann der Wertebereich der von den Multiplizierern 34 und 36 abgegebenen Werte durch einen konstanten Skalierungsfaktor bei der Kehrwertbildung angepaßt werden, was bei der angegebenen Realisierung durch einen Festwertspeicher ohne Aufwand durch entsprechende gespeicherte Werte erreicht werden kann.

Falls die einzelnen Referenzbilder nicht sehr stark verschieden sind, d.h. sich weitgehend überlappen, liegen die mit der Anordnung nach Fig. 3 ermittelten Koordinaten für die Referenzbilder in der Nähe der Koordinaten des betreffenden Zwischenbildes, so daß es zweckmäßig sein kann, anstelle der absoluten Koordinaten für die Referenzbilder den Unterschied zwischen jeweils einer Koordinate eines Zwischenbildes und der zugehörigen Bildpunktkoordinate eines Referenzbildes zu ermitteln, weil die Anzahl der Stellen der Werte für die entsprechenden Koordinaten dann geringer ist. Dies kann mit der gleichen Anordnung wie in Fig. 3 dargestellt geschehen, wobei die Werte der Parameter entsprechend gewählt werden müssen. Es sind lediglich den Multiplizierern 34 und 36 noch Addierer für die Addition der absoluten Zwischenbild-adressen nachzuschalten.

10

Die Adreßrechner 6 und 16 in Fig. 2 bzw. die in Fig. 3 dargestellten Realisierung eines solchen Adreßrechners können zu jedem Bildpunkt des Zwischenbildes die Koordinaten des zugehörigen Bild‑ punktes im Referenzbild mit einer größeren Genauigkeit als einem Bildpunkt bestimmen, so daß die ermittelte Koordinate eines Bildpunktes durchaus zwischen vier diskreten gespeicherten Bildpunkten des Referenzbildes liegen können. Anstelle nun den Wert des am nächsten liegenden Bildpunktes zu verwen‑ den, können für die Ermittlung der Helligkeit eines Zwischenpunktes in einem solchen Falle die Helligkeiten der vier Bildpunkte im Referenzbild, die der exakten Koordinate benachbart sind, zu einem gewichteten Mittel addiert werden. Die Gewichtsfaktoren sind dabei von der Lage der exakten Koordinaten relativ zu den vier benachbarten Bildpunkten abhängig.

Für eine Realisierung einer derartigen Interpolation ist es insbesondere aus zeitlichen Gründen erfor‑ derlich, die Helligkeiten der vier benachbarten Bildpunkte des Referenzbildes gleichzeitig aus dem Bild‑ speicher auslesen zu können. Um dies zu ermöglichen, werden die Bildspeicher 4 und 14 in Fig. 2 in jeweils vier Teilbildspeicher so aufgeteilt, daß jeder Teilbildspeicher nur jeden zweiten Bildpunkt in X‑ und Y‑Koordinatenrichtung aufnimmt, d.h. jeder Teilbildspeicher nimmt einen von vier in einem Quadrat benachbarten Referenzbildpunkten auf. Die dabei entstehende Ordnung der Bildpunkte in den Teilbildspei‑ chern ist in Fig. 4 angedeutet, wo an den einzelnen Bildpunkten der Bildzeilen $Z_1$ bis $Z_5$ und der Spalten $S_1$ bis $S_6$ derjenige Teilbildspeicher angegeben ist, in dem dieser Bildpunkt gespeichert wird, wobei die Teilbildspeicher mit T1 bis T4 bezeichnet sind.

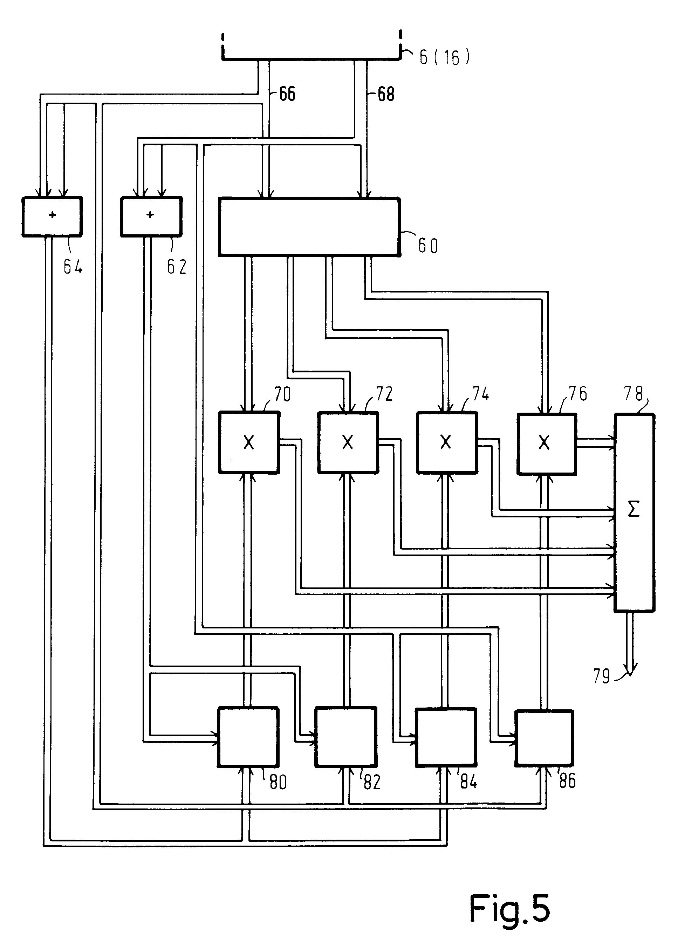

Eine Anordnung zur gewichteten Mittelung der Helligkeitswerte von Bildpunkten ist in Fig. 5 dargestellt. Der Adreßrechner 6 bzw. 16 erzeugt an den Ausgängen 66 und 68 zwei mehrstellige Koordinatenwerte als Dualzahlen mit nachfolgender Form.

$$X_R = x_1...x_1 x_0, x_{-1}...x_{-m}$$
$$Y_R = y_1...y_1 y_0, y_{-1}...y_{-m}$$

wobei jedes $x_i$ bzw. $y_i$ eine Dualziffer darstellt. Die Dualziffern mit einem Index $i < 0$ geben die Nachkommastellen an, d.h. die Bruchteile einer Bildpunktkoordinate.

Die Adressen der Teilbildspeicher 80, 82, 84 und 86 müssen nun aus diesen Koordinatenwerten ermittelt werden, wobei zu berücksichtigen ist, daß jeder Teilbildspeicher halb so viele Adressen in jeder Richtung hat wie der gesamte Bildspeicher, der durch alle vier Teilbildspeicher realisiert wird und der das gesamte Referenzbild enthält. Die Adressen der Teilbildspeicher können also durch Division der an den Ausgängen 66 und 68 auftretenden Koordinatenwerte, die hier unmittelbar als Adressen aufgefaßt werden, durch 2 gebildet werden, wobei teilweise der Rest zu berücksichtigen ist, wie anhand der Fig. 4 erläutert wird. Der Bildsignalwert, d.h. die Helligkeit des Punktes P1, der zwischen den Zeilen Z1 und Z2 sowie den Spalten S1 und S2 liegt, wird aus den ersten Bildpunkten aller vier Teilbildspeicher T1 bis T4 gebildet. Der Punkt P2, der zwischen den selben Zeilen Z1 und Z2, jedoch zwischen den Spalten S2 und S3 liegt, wird aus den ersten Punkten der Teilbildspeicher T2 und T4 und den zweiten Punkten der Teilspeicher T1 und T3 gebildet. Daraus ergibt sich, daß bei den gradzahligen Teilbildspeichern T2 und T4 die X‑Adresse aus den Vorkommastellen $x_1$ bis $x_1$ des am Ausgang 68 auftretenden X‑Koordinatenwertes gebildet werden kann, wenn dabei lediglich die letzte Vorkommastelle $x_0$ weggelassen wird, während bei den ungeradzahli‑ gen Teilbildspeichern T1 und T3 zu dieser so gebildeten Adresse noch der Wert der weggelassenen Stelle addiert werden muß. Dies erfolgt bei der Anordnung nach Fig. 5 in einem Addierer 64. Es ist allerdings auch möglich, vor der Verschiebung im Addierer 64 zu den gesamten Vorkommastellen konstant den Wert "1" zu addieren und vom Ergebnis, das auf der Leitung 63 ausgegeben wird, die letzte Stelle wegzulassen und die anderen Stellen um eine Stelle nach rechts zu verschieben..

Das gleiche gilt für die Y‑Koordinate, wo bei den Teilspeichern T3 und T4 unmittelbar die letzte Vorkommastelle $y_0$ weggelassen werden kann, während bei den Y‑Adressen für die Teilspeicher T1 und T2 eine Korrektur dieser Adresse vorgenommen werden muß, was mit dem Addierer 62 geschieht. Auf diese Weise ergibt sich die dargestellte Adressenansteuerung der Teilbildspeicher 80, 82, 84 und 86.

Die aus diesen Teilbildspeichern ausgelesenen Helligkeitswerte werden je einem zugeordneten Multi‑ plizierer 70, 72, 74 und 76 zugeführt, wo sie mit Gewichten multipliziert werden, die von den Nachkomma‑ stellen der an den Ausgängen 66 und 68 abgegebenen Koordinatenwerte abhängen. Außerdem hängen diese Gewichte noch von der letzten Vorkommastelle ab, wie sich ebenfalls aus der Fig. 4 ergibt, wenn die beiden Punkte P1 und P2 betrachtet werden. Beide weisen identische Nachkommastellen auf, jedoch ist beim Punkt P1 der entsprechende Punkt im Teilbildspeicher T4 am nächsten liegend, während beim Punkt P2 der entsprechende Punkt im Teilbildspeicher T3 am nächsten liegt.

Die Bildung der Gewichtsfaktoren aus den Nachkommastellen und der letzten Vorkommastelle der an den Ausgängen 66 und 68 des Adreßrechners 6 bzw. 16 erzeugten Koordinatenwerte erfolgt durch einen Festwertspeicher 60. Dieser liefert jedem der Multiplizierer 70, 72, 74 und 76 getrennt einen Gewichtsfaktor, und die gewichteten Helligkeitswerte der vier Bildpunkte der vier Teilspeicher werden in einem Addierer 78 aufsummiert, an dessen Ausgang 79 dann der resultierende Helligkeitswert erscheint, der dem Multiplizierer 8 bzw. 18 in Fig. 2 zugeführt wird. Es ist auch möglich, den Multiplizierer 8 bzw. 18 mit in die Multiplizierer 70, 72, 74 und 76 aufzunehmen und den Festwertspeicher 60 um die Ansteuermöglichkeit für die Ordnungsnummer n des Zwischenbildes zu erweitern.

**Patentansprüche**

1. Verfahren zur Erzeugung von Zwischenbildsignalen aus Referenzbildsignalen, die von einem gegenüber einer Objektebene relativ bewegten Sensor mit einer um den Faktor N verringerten Bildfrequenz übertragen werden, durch abbildungsangepaßte Interpolation und/oder Extrapolation,
indem das Signal jedes Bildpunktes eines Zwischenbildes aus den Signalen von Referenzbildpunkten ermittelt wird, deren Koordinaten in mindestens einem von einem zeitlich vorangehenden und einem zeitlich folgenden Referenzbild nach einem Zuordnungsverfahren aus den Koordinaten des betreffenden Bildpunktes im Zwischenbild bestimmt werden,
dadurch gekennzeichnet, daß die Zuordnung von Bildpunkten im zeitlich vorangehenden Referenzbild zu den entsprechenden Bildpunkten im zeitlich folgenden Referenzbild durch eine Abbildung erfolgt, die sich aus N aufeinanderfolgenden Durchführungen von Teilabbildungen ergibt, und daß die Zuordnung von Bildpunkten im zeitlich folgenden Referenzbild zu den entsprechenden Bildpunkten im zeitlich vorangehenden Referenzbild durch die entsprechende inverse Abbildung bzw. die inversen Teilabbildungen erfolgt,
und daß die Signale der Bildpunkte des n−ten Zwischenbildes, gerechnet von jeweils einem Referenzbild, aus den Signalen der Referenzbildpunkte ermittelt werden, deren Koordinaten im jeweils anderen Referenzbild aus den Koordinaten des Zwischenbildpunktes durch N−n aufeinanderfolgende Durchführungen der entsprechenden Teilabbildungen oder inversen Teilabbildungen bestimmbar sind.

2. Verfahren nach Anspruch 1, bei dem als Zuordnung einander entsprechender Bildpunkte in zwei Referenzbildern die folgende gilt

$$\begin{pmatrix} X_{R2} \\ Y_{R2} \\ 1 \end{pmatrix} = \frac{1}{a_7 X_{R1} + a_8 Y_{R1} + 1} \begin{pmatrix} a_1 & a_2 & a_3 \\ a_4 & a_5 & a_6 \\ a_7 & a_8 & 1 \end{pmatrix} \begin{pmatrix} X_{R1} \\ Y_{R1} \\ 1 \end{pmatrix}$$

wobei $X_{R1}$, $Y_{R1}$ bzw. $X_{R2}$, $Y_{R2}$ die Koordinaten der Bildpunkte der beiden Referenzbilder sind und die Werte $a_1$ bis $a_9$ der Matrix mindestens aus den beiden Referenzbildern ermittelt werden,
dadurch gekennzeichnet, daß das Zuordnungsverfahren für die Zwischenbilder gebildet ist durch

$$\begin{pmatrix} X_{R2} \\ Y_{R2} \\ 1 \end{pmatrix} = \frac{1}{c_7 X_n + c_8 Y_n + c_9} \begin{pmatrix} c_1 & c_2 & c_3 \\ c_4 & c_5 & c_6 \\ c_7 & c_8 & c_9 \end{pmatrix} \begin{pmatrix} X_n \\ Y_n \\ 1 \end{pmatrix}$$

mit

$$\begin{pmatrix} c_1 & c_2 & c_3 \\ c_4 & c_5 & c_6 \\ c_7 & c_8 & c_9 \end{pmatrix} = \begin{pmatrix} b_1 & b_2 & b_3 \\ b_4 & b_5 & b_6 \\ b_7 & b_8 & b_9 \end{pmatrix}^{N-n}$$

wobei $X_n$, $Y_n$ die Koordinaten der Bildpunkte des jeweiligen Zwischenbildes sind und die Werte $b_1$ bis $b_9$ gebildet werden durch

$$\begin{pmatrix} b_1 & b_2 & b_3 \\ b_4 & b_5 & b_6 \\ b_7 & b_8 & b_9 \end{pmatrix} = \begin{pmatrix} a_1 & a_2 & a_3 \\ a_4 & a_5 & a_6 \\ a_7 & a_8 & 1 \end{pmatrix}^{1/N}$$

3. Verfahren nach Anspruch 2, dadurch gekennzeichnet, daß die Werte $c_1$ bis $c_9$ gebildet werden durch

$$\begin{pmatrix} c_1 & c_2 & c_3 \\ c_4 & c_5 & c_6 \\ c_7 & c_8 & c_9 \end{pmatrix} = \frac{N-n}{N} \begin{pmatrix} \frac{N}{N-n}+(a_1-1) & a_2 & a_3 \\ a_4 & \frac{N}{N-n}+(a_5-1) & a_6 \\ a_7 & a_8 & \frac{N}{N-n} \end{pmatrix}$$

4. Verfahren nach einem der Ansprüche 1 bis 3 dadurch gekennzeichnet, daß als Zuordnungsverfahren für die Bestimmung der Koordinaten des einen Referenzbildes das inverse Zuordnungsverfahren wie für die Bestimmung der Koordinaten des anderen Referenzbildes verwendet wird.

5. Verfahren nach Anspruch 1 oder einem der folgenden, dadurch gekennzeichnet, daß die die Zuordnung einander entsprechender Bildpunkte in benachbarten Referenzbildern angebenden Signale auf der Sensorseite ermittelt und zusätzlich zu den Referenzbildsignalen übertragen werden.

6. Verfahren nach Anspruch 5, dadurch gekennzeichnet, daß die die Zuordnung angebenden Signale auf der Sensorseite aus den vom Sensor mit höherer Bildfolgefrequenz erzeugten Bildern ermittelt werden.

7. Verfahren nach einem der Ansprüche 1 bis 6 für mehrere Objektebenen, dadurch gekennzeichnet, daß für jede Objektebene ein gesondertes Zuordnungsverfahren aus der Zuordnung einander entsprechender Bildpunkte in einem diese Objekte umfassenden Teilbildbereich gebildet wird.

8. Verfahren nach einem der vorhergehenden Ansprüche, dadurch gekennzeichnet, daß die Koordinaten der Bildpunkte in den Referenzbildern auf Bruchteile von ganzen Einheiten genau bestimmt werden, und daß das Signal eines Referenzbildpunktes, dessen Koordinaten nicht genau durch ganze Einheiten darstellbar sind, aus den Signalen der diesem Bildpunkt benachbarten Bildpunkte mit durch ganze Einheiten darstellbaren Koordinaten gebildet wird.

9. Anordnung zur Durchführung des Verfahrens nach Anspruch 8, enthaltend eine Rechenanordnung (2), die aus den die Zuordnung einander entsprechender Bildpunkte in zwei Referenzbildern angebenden Signalen die Signale für die resultierende Zuordnung der Bildpunkte des im zugehörigen Bildspeicher enthaltenen Referenzbildes zu jedem Bildpunkt des jeweiligen Zwischenbildes ermittelt, mindestens einen frei adressierbaren Bildspeicher (4, 14), der die übertragenen Referenzbildsginale in einer vorgegebenen Adressenfolge aufnimmt, mindestens eine Adreßrechenanordnung (6, 16), die aus den für das Zuordnungsverfahren von der Rechenanordnung (2) ermittelten Signalen und den Koordinaten der Bildpunkte des jeweils zu erzeugenden Zwischenbildes die Adressen der zugehörigen Referenzbildsignale im Bildspeicher (4, 14)

13

erzeugt und diesem zuführt, und

eine Ausgangsanordnung (8, 18, 20), die aus den an diesen Adressen ausgelesenen Referenzbildsignalen die Zwischenbildsignale erzeugt,

dadurch gekennzeichnet, daß jeder Bildspeicher (4, 14) aus vier Teilspeichern (80 bis 86) besteht, von denen jeder das Referenzbildsignal eines anderen von jeweils vier in einem Quadrat benachbarten Referenzbildpunkten aufnimmt,

daß jede Adreßrechenanordnung (6, 62, 64) die Adressen auf Bruchteile von ganzen Einheiten genau bestimmt und in jedem Teilspeicher (80 bis 86) den Referenzbildpunkt adressiert, der der genauen Adresse am nächsten benachbart ist,

und daß den Bildsignalausgängen (81 bis 87) der Teilspeicher (80 bis 86) eine Multiplizieranordnung (70 bis 76), die das Bildsignal jedes Teilspeichers (80 bis 86) mit einem von der letzten Stelle und den Nachkommastellen der genauen Adresse abgeleiteten Gewichtsfaktor multipliziert, und eine Addiervorrichtung (78) zum Addieren der multiplizierten Bildsignale und zum Erzeugen des resultierenden Referenzbildsignales für die Ausgangsanordnung (8, 18, 20) nachgeschaltet ist.

10. Anordnung zur Durchführung des Verfahrens nach einem der Ansprüche 2 bis 4, enthaltend eine Rechenanordnung (2), die aus den die Zuordnung einander entsprechender Bildpunkte in zwei Referenzbildern angebenden Signalen die Signale für die resultierende Zuordnung der Bildpunkte des im zugehörigen Bildspeicher enthaltenen Referenzbildes zu jedem Bildpunkt des jeweiligen Zwischenbildes ermittelt, mindestens einen frei adressierbaren Bildspeicher (4, 14), der die übertragenen Referenzbildsginale in einer vorgegebenen Adressenfolge aufnimmt,

mindestens eine Adreßrechenanordnung (6, 16), die aus den für das Zuordnungsverfahren von der Rechenanordnung (2) ermittelten Signalen und den Koordinaten der Bildpunkte des jeweils zu erzeugenden Zwischenbildes die Adressen der zugehörigen Referenzbildsignale im Bildspeicher (4, 14) erzeugt und diesem zuführt, und

eine Ausgangsanordnung (8, 18, 20), die aus den an diesen Adressen ausgelesenen Referenzbildsignalen die Zwischenbildsignale erzeugt,

dadurch gekennzeichnet, daß jede Adreßrechenanordnung drei Teilrechenanordnungen (30, 32, 38), die die beiden Zählerwerte für die Adressen der beiden Koordinatenrichtungen und den Nennerwert getrennt aus den jeweils von der Rechenanordnung (2) zugeführten Werten $c_1$ bis $c_9$ und aus den Koordinaten des momentanen Bildpunktes des Zwischenspeichers ermitteln, eine Kehrwertanordnung (40),

die der Teilrechenanordnung (38) für den Nennerwert nachgeschaltet ist und den Kehrwert des Nennerwertes bildet, und zwei Multiplizierer (34, 36) enthält, die die beiden Zählerwerte mit dem Kehrwert multiplizieren, wobei die Ausgangssignale beider Multiplizierer zusammen die Adresse des Referenzbildpunktes im zugehörigen Referenzbildspeicher (4, 14) darstellen.

11. Anordnung nach Anspruch 10,

dadurch gekennzeichnet, daß jede Teilrechenanordnung (30, 32, 38) einen Akkumulator aus einem Addierer (42) und einem nachgeschalteten Register (44), dessen Ausgang mit dem einen Eingang des Addierers (42) verbunden ist, enthält, wobei dem anderen Eingang des Addierers (46) ein Umschalter vorgeschaltet ist, der von einem Bildwechselsignal gesteuert zu Beginn jedes neuen Zwischenbildes den absoluten Koeffizienten $c_3$ bzw. $c_6$ bzw. $c_9$ bzw. einen davon abgeleiteten Wert und außerdem von einem Zeilenwechselsignal gesteuert zu Beginn jeder neuen Zeile den zur Zeilenkoordinate $Y_n$ gehörigen Koeffizienten $c_2$ bzw. $c_5$ bzw. $c_8$, vermindert um das $k$-fache des zur Spaltenkoordinate $X_n$ (Bildpunkte) gehörigen Koeffizienten $c_1$ bzw. $c_4$ bzw. $c_7$, wobei $k$ die Anzahl Bildpunkte pro Zeile ist, und im übrigen diesen letzteren Koeffizienten dem anderen Eingang des Addierers (42) zuführt, wobei das Register (44) mit jedem Bildpunkttakt das Ausgangssignal des Addierers (42) übernimmt und der Ausgang des Registers (44) der jeweiligen Teilrechenanordnung (30, 32, 38) den Zählerwert bzw. den Nennerwert liefert.

## Claims

1. A method of generation of intermediate frame signals from reference frame signals which are being transmitted at a frame rate reduced by the factor N from a sensor which is being moved relatively to an object plane, through image-adapted interpolation and/or extrapolation,

by the signal of each picture element of an intermediate frame being determined from the signals of reference picture elements the coordinates of which are determined in at least one of two reference frames, one which precedes it in time and one which follows it, according to a coordination method from the coordinates of the picture element in question in the intermediate frame,

characterized in that the coordination of picture elements in the reference frame which precedes in time with the corresponding picture elements in the reference frame which follows in time, is effected by an imaging which results from N successive performances of partial imagings,

and that the coordination of picture elements in the reference frame which follows in time with the corresponding picture elements in the reference frame which precedes in time is effected through the corresponding inverse imaging or the inverse partial imagings respectively,

and that the signals of the picture elements of the nth intermediate frame, reckoned from any one reference frame, are determined from the signals of the reference picture elements the coordinates of which in any other reference frame may be determined from the coordinates of the intermediate picture element through $N - n$ successive performances of the corresponding partial imagings or inverse partial imagings.

2. A method as in Claim 1, in which as the coordination of picture elements corresponding with one another in two reference frames the equation:

$$\begin{pmatrix} X_{R2} \\ Y_{R2} \\ 1 \end{pmatrix} = \frac{1}{a_7 X_{R1} + a_8 Y_{R1} + 1} \begin{pmatrix} a_1 & a_2 & a_3 \\ a_4 & a_5 & a_6 \\ a_7 & a_8 & 1 \end{pmatrix} \begin{pmatrix} X_{R1} \\ Y_{R1} \\ 1 \end{pmatrix}.$$

applies in which $X_{R1}$, $Y_{R1}$ resp. $X_{R2}$, $Y_{R2}$ are the coordinates of the picture elements in the two reference frames and the values $a_1$ to $a_9$ of
the matrix are determined from at least the pair of reference frames,
characterized in that the method of coordination for the intermediate frames is formed by

$$\begin{pmatrix} X_{R2} \\ Y_{R2} \\ 1 \end{pmatrix} = \frac{1}{c_7 X_n + c_8 Y_n + c_9} \begin{pmatrix} c_1 & c_2 & c_3 \\ c_4 & c_5 & c_6 \\ c_7 & c_8 & c_9 \end{pmatrix} \begin{pmatrix} X_n \\ Y_n \\ 1 \end{pmatrix}$$

with :

$$\begin{pmatrix} c_1 & c_2 & c_3 \\ c_4 & c_5 & c_6 \\ c_7 & c_8 & c_9 \end{pmatrix} = \begin{pmatrix} b_1 & b_2 & b_3 \\ b_4 & b_5 & b_6 \\ b_7 & b_8 & b_9 \end{pmatrix}^{N-n}$$

in which $X_n$, $Y_n$ are the coordinates of the picture elements of the respective intermediate frame and the values $b_1$ to $b_9$ are formed by

$$\begin{pmatrix} b_1 & b_2 & b_3 \\ b_4 & b_5 & b_6 \\ b_7 & b_8 & b_9 \end{pmatrix} = \begin{pmatrix} a_1 & a_2 & a_3 \\ a_4 & a_5 & a_6 \\ a_7 & a_8 & 1 \end{pmatrix}^{1/N}$$

3. A method as in Claim 2, <u>characterized in that</u> the values $c_1$ to $c_9$ are formed by

$$\begin{pmatrix} c_1 & c_2 & c_3 \\ c_4 & c_5 & c_6 \\ c_7 & c_8 & c_9 \end{pmatrix} = \frac{N-n}{N} \begin{pmatrix} \frac{N}{N-n}+(a_1-1) & a_2 & a_3 \\ a_4 & \frac{N}{N-n}+(a_5-1) & a_6 \\ a_7 & a_8 & \frac{N}{N-n} \end{pmatrix}$$

4. A method as in one of the Claims 1 to 3, <u>characterized</u> in that as the coordination method for the determination of the coordinates of the <u>one reference</u> frame the inverse coordination method is employed, like that for the determination of the coordinates of the other reference frame.

5. A method as in Claim 1 or one of those following, <u>characterized in that</u> the signals specifying the coordination of picture elements which correspond with <u>one another in</u> adjacent reference frames are determined on the sensor side and transmited in addition to the reference frame signals.

6. A method as in Claim 5, <u>characterized in that</u> the signals specifying the coordination are determined on the sensor side from the <u>frames generated by</u> the sensor at higher frame repetition rate.

7. A method as in one of the Claims 1 to 6 for a number of object planes <u>characterized in that</u> for each object plane a separate coordination method is formed from the <u>coordination of picture elements</u> which correspond with one another in a partial frame region embracing these objects.

8. A method as in one of the preceding Claims, characterized in that the coordinates of the picture elements in the reference frames are determined exactly to fractions of whole units, and that the signal of a reference picture element of which the coordinates cannot be represented exactly by whole units is formed from the signals of picture elements adjacent to the said picture element, which have coordinates which may be represented by whole units.

9. An arrangement for the performance of the method as in Claim 8, containing a computational arrangement (2) which from the signals specifying the coordination of picture elements which cor‐ respond with one another in two reference frames determines for each picture element of the respective intermediate frame the signals for the resulting coordination of the picture elements of the reference frame contained in the associated frame store,
at least one freely addressable frame store (4, 14) which receives the transmitted reference frame signals in a predetermined address sequence,
at least one address computational arrangement (6, 16) which from the signals determined by the computational arrangement (2) for the coordination method and the coordinates of the picture elements of the intermediate frame to be generated at the time, generates in the frame store (4, 14) the addresses of the associated referecne frame signals and feeds them to the latter, and
an output arrangement (8, 18, 20) which from the reference frame signals read out at these addresses generates the intermediate frame signals,
characterized in that each frame store (4, 14) consists of four part‐stores (80 to 86) each of which receives the reference frame signal of another of four reference picture elements at a time, which lie adjacent to one another in a square,
that each address computational arrangement (6, 62, 64) determines the addresses exactly to fractions of whole units and addresses in each part‐store (80 to 86) the reference picture element which is most nearly adjacent to the exact address,
and that after the frame signal outputs (81 to 87) from the part‐stores (80 to 86) there is connected a multiplier arrangement (70 to 76) which multiplies the frame signal from each part‐store (80 to 86) by a weighting factor which is derived from the last integer and the decimal places of the exact address, and an adder (78) for adding the multiplied frame signals and for generating the resulting reference frame signal for the output arrangement (8, 18, 20).

16

10. An arrangement for the performance of the method as in one of the Claims 2 to 4, containing a computational arrangement (2) which from the signals specifying the coordination of picture elements corresponding with one another in two reference frames determines for each picture element of the respective intermediate frame the signals for the resulting coordination of the picture elements of the reference frame contained in the associated frame store, at least one freely addressable image store (4, 14) which receives the transmitted reference frame signals in a predetermined address sequence,

at least one address computational arrangement (6, 16) which from the signals determined by the computational arrangement (2) for the coordination method and the coordinates of the picture elements of the intermediate frame which is to be generated at the time generates in the frame store (4, 14) the addresses of the associated referecne frame signals and feeds them to the latter, and an output arrangement (8, 18, 20) which from the reference frame signals read out at these addresses generates the intermediate frame signals,

characterized in that each address computational arrangement contains three part−computational arrangements (30, 32, 38) which determine the pair of counter values for the addresses of the two directions of the coordinates and the value of the denominator separately from the values $c_1$ to $c_9$ fed by the computational arrangement (2) at the time and from the coordinates of the instantaneous picture element of the intermediate store, a reciprocal value arrangement (40) which is connected after the part−computational arrangement (38) for the value of the denominator and forms the reciprocal value of the value of the denominator, as well as two multipliers (34, 36) which mutiply the two counter values by the reciprocal value, so that the output signals from the two multipliers together represent the address of the reference picture element in the associated reference frame store (4, 14).

11. An arrangement as in Claim 10, characterized in that each part−computational arrangement (30, 32, 38) contains an accumulator comprising an adder (42) and a register (44) which is connected after it and the output from which is connected to the one input to the adder (42), whilst a changeover switch is connected before the other input to the adder (46) and being controlled by a frame−change signal at the start of each new intermediate frame reduces the absolute coefficient $c_3$ resp. $c_6$ resp. $c_9$ resp. a value derived therefrom and being furthermore controlled by a line−change signal at the start of each new line reduces the coefficient $c_2$ resp. $c_5$ resp. $c_8$ belonging to the line coordinate $Y_n$ by k times the coefficient $c_1$ resp. $c_4$ resp. $c_7$ belonging to the column coordinate $\overline{X}_n$ (picture elements), where k is the number of picture elements per line, and for the rest feeds this latest coefficient to the other input to the adder (42), whilst the register (44) at each picture element cycle takes over the output signal from the adder (42) and the output from the register (44) delivers the counter value or respectively the value of the denominator to the respective part−computational arrangement (30, 32, 38).

**Revendications**

1. Procédé destiné à produire des signaux d'images intermédiaires à partir de signaux d'images de référence, lesquelles sont transmises à une fréquence d'image réduite d'un facteur N par un capteur en mouvement relatif par rapport au niveau de l'objet, par interpolation et/ou extrapolation adaptées à la prise de vues,

ceci par détection du signal de chaque point d'image d'une image intermédiaire à partir des signaux de points d'image de référence, dont les coordonnées sont déterminées selon un procédé d'association à partir des coordonnées du point d'image concerné de l'image intermédiaire dans au moins une image de référence précédente et une image de référence suivante,

caractérisé en ce que l'association des points d'image dans l'image de référence précédente aux points d'image correspondants dans l'image de référence suivante est effectuée par une prise de vues, laquelle résulte de N exécutions successives de prises de vues, et en ce que l'association des points d'image de l'image de référence suivante aux points d'image correspondants dans l'image de référence précédente est effectuée par une prise de vues inverse correspondante et/ou des prises de vues partielles inverses,

et en ce que les signaux du point d'image de la énième image intermédiaire, calculés à partir d'une image de référence respective, sont déterminés à partir des signaux des points d'image de référence dont les coordonnées peuvent être déterminées dans l'autre image de référence respective à partir des coordonnées du point d'image intermédiaire par N − n exécutions successives de prises de vues partielles correspondantes, ou de prises de vues partielles inverses.

EP 0 213 683 B1

**2.** Procédé selon la revendication 1, pour lequel l'association de points d'image correspondant entre eux dans deux images de référence est la suivante

$$
\begin{pmatrix} X_{R2} \\ Y_{R2} \\ 1 \end{pmatrix} = \frac{1}{a_7 X_{R1} + a_8 Y_{R1} + 1} \begin{pmatrix} a_1 & a_2 & a_3 \\ a_4 & a_5 & a_6 \\ a_7 & a_8 & 1 \end{pmatrix} \begin{pmatrix} X_{R1} \\ Y_{R1} \\ 1 \end{pmatrix}
$$

$X_{R1}$, $Y_{R1}$ ou $X_{R2}$, $Y_{R2}$ étant les coordonnées des points d'image des deux images de référence, et les valeurs $a_1$ à $a_9$ de la matrice étant déterminées au moins à partir des deux images de référence, caractérisé en ce que le procédé d'association pour les images intermédiaires est défini par

$$
\begin{pmatrix} X_{R2} \\ Y_{R2} \\ 1 \end{pmatrix} = \frac{1}{c_7 X_n + c_8 Y_n + c_9} \begin{pmatrix} c_1 & c_2 & c_3 \\ c_4 & c_5 & c_6 \\ c_7 & c_8 & c_9 \end{pmatrix} \begin{pmatrix} X_n \\ Y_n \\ 1 \end{pmatrix}
$$

avec

$$
\begin{pmatrix} c_1 & c_2 & c_3 \\ c_4 & c_5 & c_6 \\ c_7 & c_8 & c_9 \end{pmatrix} = \begin{pmatrix} b_1 & b_2 & b_3 \\ b_4 & b_5 & b_6 \\ b_7 & b_8 & b_9 \end{pmatrix}^{N-n}
$$

$X_n$, $Y_n$ étant les coordonnées des points d'image de chaque image intermédiaire et les valeurs $b_1$ à $b_9$ étant définies par

$$
\begin{pmatrix} b_1 & b_2 & b_3 \\ b_4 & b_5 & b_6 \\ b_7 & b_8 & b_9 \end{pmatrix} = \begin{pmatrix} a_1 & a_2 & a_3 \\ a_4 & a_5 & a_6 \\ a_7 & a_8 & 1 \end{pmatrix}^{1/N}
$$

**3.** Procédé selon la revendication 2,
caractérisé en ce que les valeurs $c_1$ à $c_9$ sont définies par

18

$$\begin{pmatrix} c_1 & c_2 & c_3 \\ c_4 & c_5 & c_6 \\ c_7 & c_8 & c_9 \end{pmatrix} = \frac{N-n}{N} \begin{pmatrix} \frac{N}{N-n}+(a_1-1) & a_2 & a_3 \\ a_4 & \frac{N}{N-n}+(a_5-1) & a_6 \\ a_7 & a_8 & \frac{N}{N-n} \end{pmatrix}$$

**4.** Procédé selon l'une quelconque des revendications 1 à 3, caractérisé en ce que le procédé d'association utilisé pour la détermination des coordonnées d'une des images de référence est l'inverse de celui utilisé pour la détermination des coordonnées de l'autre image de référence.

**5.** Procédé selon la revendication 1 ou l'une quelconque des revendications suivantes, caractérisé en ce que les signaux indiquant l'association des points d'image correspondant entre eux dans des images de référence voisines sont déterminés du côté du capteur et transmis en plus des signaux des images de référence.

**6.** Procédé selon la revendication 5, caractérisé en ce que les signaux indiquant l'association du côté du capteur sont déterminés à partir d'images produites par le capteur à une fréquence d'image plus élevée .

**7.** Procédé selon l'une quelconque des revendications 1 à 6 pour plusieurs niveaux d'objets, caractérisé en ce que pour chaque niveau d'objet, il est défini un procédé d'association distinct à partir de l'association de points d'image correspondant entre eux dans une zone d'images partielles englobant cet objet.

**8.** Procédé selon l'une quelconque des revendications précédentes, caractérisé en ce que les coordonnées des points d'image dans les images de référence sont déterminées exactement par des fractions d'unités entières, et en ce que le signal d'un point d'image de référence, dont les coordonnées ne peuvent pas être représentées exactement par des unités entières, est constitué par des coordonnées pouvant être représentées par des unités entières à partir des signaux des points d'image voisins de ce point d'image.

**9.** Dispositif pour la réalisation du procédé selon la revendication 8, comprenant : une unité de calcul (2) qui, à partir des signaux indiquant l'association de points d'image correspondant entre eux dans deux images de référence, détermine les signaux pour l'association en résultant entre les points d'image de l'image de référence contenue dans la mémoire d'images associée et chaque point d'image de l'image intermédiaire respective ;
au moins une mémoire d'images (4, 14) à adressage libre, laquelle enregistre les signaux d'images de référence transmis dans une chronologie d'adressage prédéterminée ;
au moins une unité d'adressage (6, 16) qui, à partir des signaux détectés par l'unité de calcul (2) pour le procédé d'association et des coordonnées des points d'image de l'image intermédiaire respective à produire, engendre les adresses des signaux des images de référence associées dans la mémoire d'images (4, 14) et les transmet à cette dernière ; et,
une unité de sortie (8, 18, 20) produisant les signaux des images intermédiaires à partir des signaux des images de référence lus à ces adresses,
caractérisé en ce que chaque mémoire d'images (4, 14) est composée de quatre mémoires partielles (80 à 86), dont chacune enregistre le signal de l'image de référence de quatre points d'image de référence respectivement voisins dans un carré,
en ce que chaque unité d'adressage (6, 62, 64) définit exactement les adresses par des fractions d'unités entières et adresse le point d'image de référence le plus proche de l'adresse exacte dans chaque mémoire partielle (80 à 86),
et en ce qu'un dispositif multiplicateur (70 à 76) est placé en aval des sorties de signaux d'images (81 à 87) des mémoires partielles (80 à 86), lequel multiplie le signal d'image de chaque mémoire partielle (80 à 86) par un facteur de pondération dérivé du dernier chiffre et des chiffres placés après la virgule de l'adresse exacte, ainsi qu'un dispositif additionneur (78) destiné à additionner les signaux d'images multipliés et à produire le signal d'image de référence en résultant pour l'unité de sortie (8, 18, 20).

10. Dispositif pour la réalisation du procédé selon l'une quelconque des revendications 2 à 4, comprenant : une unité de calcul (2) qui, à partir des signaux indiquant l'association de points d'image correspondant entre eux dans deux images de référence, détermine les signaux pour l'association en résultant entre les points d'image de l'image de référence contenue dans la mémoire d'images associée et chaque point d'image de l'image intermédiaire respective ;

au moins une mémoire d'images (4, 14) à adressage libre, laquelle enregistre les signaux d'images de référence transmis dans une chronologie d'adressage prédéterminée ;

au moins une unité d'adressage (6, 16) qui, à partir des signaux détectés par l'unité de calcul (2) pour le procédé d'association et des coordonnées des points d'image de l'image intermédiaire respective à produire, engendre les adresses des signaux des images de référence associées dans la mémoire d'images (4, 14) et les transmet à cette dernière ; et,

une unité de sortie (8, 18, 20) produisant les signaux des images intermédiaires à partir des signaux des images de référence lus à ces adresses,

caractérisé en ce que chaque unité d'adressage comprend trois unités de calcul partielles (30, 32, 38), lesquelles déterminent séparément les deux valeurs de comptage pour les adresses des deux axes de coordonnées et la valeur du dénominateur à partir des valeurs $c_1$ à $c_9$ et des coordonnées du point d'image instantané de la mémoire intermédiaire respectivement transmises par l'unité de calcul (2), un dispositif d'inversion de valeurs (40) placé en aval de l'unité de calcul partielle (38) pour la valeur du dénominateur et qui définit la valeur inversée de la valeur du dénominateur, et deux multiplicateurs (34, 36) qui multiplient les deux valeurs de comptage avec la valeur inversée, les signaux de sortie réunis des deux multiplicateurs représentant l'adresse du point d'image de référence dans la mémoire d'images de référence (4, 14) associée.

11. Dispositif selon la revendication 10,

caractérisé en ce que chaque unité de calcul partielle (30, 32, 38) comprend un accumulateur constitué d'un additionneur (42) et d'un registre (44) placé en aval, dont la sortie est reliée à l'une des entrées de l'additionneur (42), un inverseur étant placé en amont de l'autre entrée de l'additionneur (46), lequel, piloté d'une part par un signal de changement d'image minore le coefficient absolu $c_3$ ou $c_6$ ou $c_9$ ou une valeur en découlant au début de chaque nouvelle image intermédiaire, et piloté d'autre part par un signal de changement de ligne minore le coefficient $c_2$ ou $c_5$ ou $c_8$ faisant partie de la coordonnée de la ligne $Y_n$ du multiple de k du coefficient $c_1$ ou $c_4$ ou $c_7$ faisant partie de la coordonnée de colonne $X_n$ (points d'image), k étant le nombre de points d'image par ligne et transmettant par ailleurs ce dernier coefficient à l'autre entrée de l'additionneur (42), le registre (44) reprenant le signal de sortie de l'additionneur (42) à chaque impulsion de point d'image, et la sortie du registre (44) de chaque unité de calcul partielle (30, 32, 38) fournissant la valeur du comptage ou la valeur du dénominateur.

Fig.1

Fig.2

Fig.3

Fig.4

Fig.5